(19)

Europäisches
Patentamt
European
Patent Office
Office européen
des brevets

(11) **EP 3 770 630 A1**

(12) **EUROPEAN PATENT APPLICATION**
published in accordance with Art. 153(4) EPC

(43) Date of publication:
**27.01.2021 Bulletin 2021/04**

(21) Application number: **19770646.8**

(22) Date of filing: **11.03.2019**

(51) Int Cl.:
**G01S 7/40** *(2006.01)*    **G01S 13/91** *(2006.01)*

(86) International application number:
**PCT/JP2019/009703**

(87) International publication number:
**WO 2019/181608 (26.09.2019 Gazette 2019/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2018 JP 2018056933**

(71) Applicant: **Hitachi Kokusai Electric Inc.**
**Tokyo 105-8039 (JP)**

(72) Inventor: **SATO, Yosuke**
**Kodaira-shi, Tokyo 187-8511 (JP)**

(74) Representative: **D Young & Co LLP**
**120 Holborn**
**London EC1N 2DY (GB)**

(54) **RADAR DEVICE, RADAR SYSTEM, AND METHOD FOR ADJUSTING RADAR ANTENNA**

(57)    The present invention enables an antenna angle to be adjusted without an operator entering a detection target area of a radar device. This radar system is provided with a radar device 100 installed with an antenna directed toward a specific detection target area R, a reference reflective body 300 installed in a prescribed position outside the detection target area R, and a radar controller 200 which controls an antenna angle of the radar device 100. The radar controller 200 controls the antenna angle of the radar device 100 on the basis of a positional relationship between the antenna of the radar device 100, the reference reflective body 300, and the detection target area R, and on the basis of a receiving result of a reflected wave from the reference reflective body 300 obtained by the antenna.

FIG.2

EP 3 770 630 A1

**Description**

TECHNICAL FIELD

The present invention relates to a radar device which detects an object present in a specific detection target area on the basis of a receiving result of a reflected wave to a transmitted wave.

BACKGROUND ART

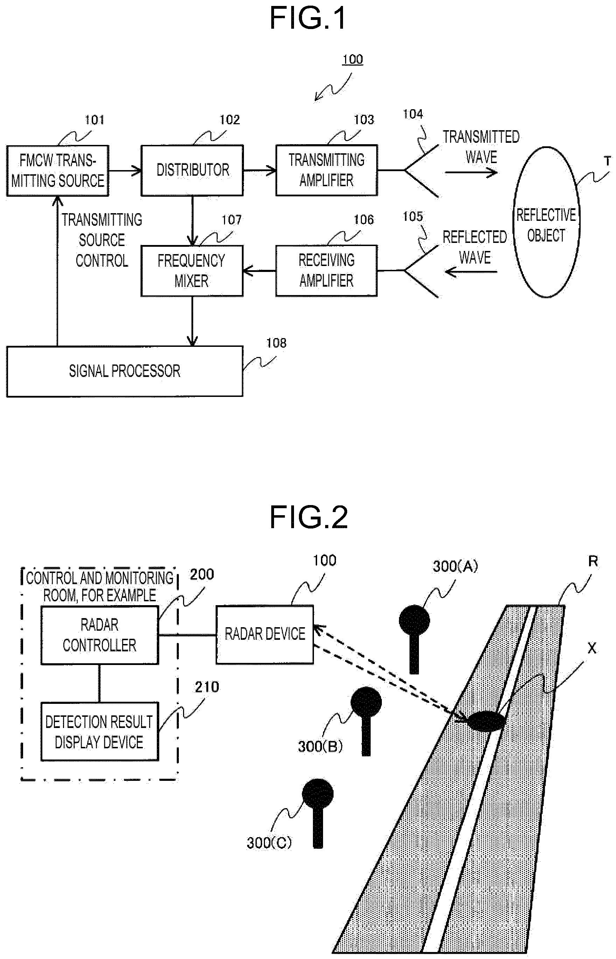

Heretofore, a radar device has been used which detects an object present in a specific detection target area on the basis of a receiving result of a reflected wave to a transmitted wave to detect a fallen foreign object on a road surface of an airport runway or the like and quickly remove the object. An example of the radar device using a microwave or millimeter wave band or the like is a frequency modulated continuous-wave (FMCW) radar device including such a structure as shown in Fig. 1.

A radar device 100 of Fig. 1 amplifies a frequency modulated radar signal from an FMCW transmitting source 101 with a transmitting amplifier 103, and transmits the signal via a transmitting antenna 104. In case where an object T (a reflective object) is present in a detection target area of the radar device 100, a transmitted wave from the radar device 100 is reflected by the object T. A reflected wave from the object T is received by a receiving antenna 105, mixed with a transmitting radar signal component from a distributor 102 by a frequency mixer 107, and converted to an IF signal. The IF signal output from the frequency mixer 107 is subjected to A/D conversion and signal processing in a signal processor 108. As a result, radar detection results are obtained, such as reflection receiving power (reflected wave power) by the object T, a distance to the object T, and a rate in case where the object T is moving (a relative speed to the radar device 100).

Heretofore, various inventions have been suggested regarding such a radar device.

For example, in Patent Literature 1, an invention is disclosed in which millimeter wave radar is installed in a moving body, to measure a distance to a target position, on the basis of a distance between a first reflective body and a second reflective body, and receiving results of reflected waves from these reflective bodies.

CITATION LIST

PATENT LITERATURE

PATENT LITERATURE 1: International Publication No. WO 2017/018021

SUMMARY OF INVENTION

TECHNICAL PROBLEM

An example of a use application of a radar device is an application of detecting a fallen object on a road surface of a road, a runway or the like. In this case, at a normal time, a desired reflective object such as the fallen object is not present on the road or the runway. Consequently, a transmitting wave continues to be sent to a detection target area where any desired reflective objects are not present, and only in case where a desired reflective object such as the fallen object appears in the detection target area, a received wave (a reflected wave) is present, and the object is detected.

During an installing operation of the radar device, in order to optimally adjust receiving sensitivity of the radar device, it is desirable to actually place a reflective object in an assumed detection target area and to adjust an antenna angle of the radar device while confirming reflected radio wave intensity. However, there is usually traffic of vehicles, aircrafts or the like on the road, the runway or the like, and hence an operator cannot easily enter the road, the runway or the like to place the reflective object. Furthermore, it is also considered that the reflective object is actually placed on the road surface to perform an adjustment operation in a time zone where traffic of the vehicles or aircrafts is low, for example, at nighttime. However, if mechanical deviation or the like is generated in an antenna fixing angle due to change over time or the like, it becomes necessary to actually place the reflective object on the road surface and perform the adjustment operation for each deviation.

Consequently, in case where a place such as the road or the runway which cannot be usually easily entered by the operator is the detection target area of the radar device, the adjustment of the antenna angle of the radar device has involved difficulty.

The present invention has been developed in view of such conventional situations as described above, and an object thereof is to provide a technology which enables an antenna angle to be adjusted without an operator entering a detection target area of a radar device.

SOLUTION TO PROBLEM

In the present invention, to achieve the above object, a radar system is configured as follows.

That is, provided is a radar system which controls an angle of an antenna of a radar device detecting an object present in a specific detection target area on the basis of a receiving result of a reflected wave to a transmitted wave, characterized by comprising a reference reflective body installed in a prescribed position, and a controller which controls the angle of the antenna on the basis of a positional relationship among the antenna, the reference reflective body, and the detection target area, and on the basis of a receiving result of the reflected wave from the reference reflective body obtained by the antenna.

More specifically, the controller calculates an optimum antenna angle $\phi' = \theta' + \varphi$ to the detection target area on the basis of an angle difference $\varphi$ between an optimum antenna angle $\theta$ to the reference reflective body and an optimum antenna angle $\phi$ to the detection target area calculated based on the positional relationship, and on the basis of an optimum antenna angle $\theta'$ to the reference reflective body based on the receiving result of the reflected wave from the reference reflective body, to control the angle of the antenna into the antenna angle $\phi'$.

Here, the antenna angles $\theta$ and $\phi$ can be calculated on the basis of relational equations:

$$\theta = \arctan\,(d/(H-h)),$$

and

$\phi = \arctan\,(D/H)$, in which H is a height of the antenna, h is a height of the reference reflective body, d is a horizontal distance between the antenna and the reference reflective body, and D is a horizontal distance between the antenna and the detection target area.

Note that the controller may be configured to control the angle of the antenna by use of at least one of a reference reflective body installed on the same side as the radar device to the detection target area or a reference reflective body installed on a side opposite to the radar device with respect to the detection target area.

Furthermore, the controller may be configured to control the angle of the antenna of the radar device by use of two reference reflective bodies, in case where the two reference reflective bodies are installed to sandwich the detection target area therebetween and the radar device is installed on an extension line connecting the two reference reflective bodies.

Additionally, the controller may be incorporated in the radar device, or may be a separate device communicatively connected to the radar device.

ADVANTAGEOUS EFFECTS OF INVENTION

According to the present invention, an antenna angle can be adjusted without an operator entering a detection target area of a radar device.

BRIEF DESCRIPTION OF DRAWINGS

[FIG. 1] Fig. 1 is a diagram showing a configuration example of a radar device according to a conventional technology.
[FIG. 2] Fig. 2 is a diagram showing an outline of a radar system according to an embodiment of the present invention.

[FIG. 3] Fig. 3 is a plan view of the radar system of Fig. 2.
[FIG. 4] Fig. 4 is a side view of the radar system of Fig. 2.
[FIG. 5] Fig. 5 is a diagram showing a calculation example of $\Delta\theta$ in case where a plurality of reference reflective bodies are used.
[FIG. 6] Fig. 6 is a diagram showing another calculation example of $\Delta\theta$ in case where the plurality of reference reflective bodies are used.
[FIG. 7] Fig. 7 is a chart showing an example of adjustment flow of an antenna angle by the radar system of Fig. 2.
[FIG. 8] Fig. 8 is a plan view showing a behavior that the radar devices and the reference reflective bodies are arranged on opposite sides of a detection target area.

DESCRIPTION OF EMBODIMENTS

Description will be made as to a radar system according to an embodiment of the present invention with reference to the drawings.

Fig. 2 shows an outline of the radar system according to the embodiment of the present invention. The radar system of the present embodiment comprises a radar device 100 installed with an antenna directed toward a specific detection target area R, and a radar controller 200 and a detection result display device 210 which are installed in a control room, a monitoring room or the like. Fig. 2 shows only one radar device 100, but a plurality of radar devices 100 having different detection target areas R, respectively, may be installed.

The radar device 100 receives a reflected wave of a radio wave (a transmitted wave) transmitted to the detection target area R to process a signal, and transmits the signal to the radar controller 200. The radar controller 200 summarizes data transmitted from the respective radar devices 100 in the system, and displays a detection result of a fallen object X in the detection result display device 210. Furthermore, the radar controller 200 also has a function of adjusting (controlling) an antenna angle of the radar device 100. The radar device 100 of the present embodiment is configured so that a transmitting antenna and a receiving antenna are unitized, and angles of the respective antennas can be controlled in conjunction. Hereinafter, such an antenna unit will be called the antenna.

In the radar device 100, a predetermined section on a road surface of a road, a runway or the like is set to the detection target area R, and the antenna angle is adjusted to include the detection target area R. At this time, in case where the antenna angle of the radar device 100 is out of the detection target area R, even if the fallen object X is present in the detection target area R, reflected wave intensity from the fallen object X decreases, and hence sufficient receiving sensitivity cannot be obtained. Therefore, it is important to optimally set the antenna angle of the radar device 100 to the detection target area R. As described above, during the adjustment of the antenna angle, it is desirable to install a certain reflective object on the road surface and perform an adjustment operation depending on the reflected wave of the object. However, in a place where there is traffic of vehicles or aircrafts, such as the road, runway, it is difficult to actually install the reflective object and perform the adjustment operation.

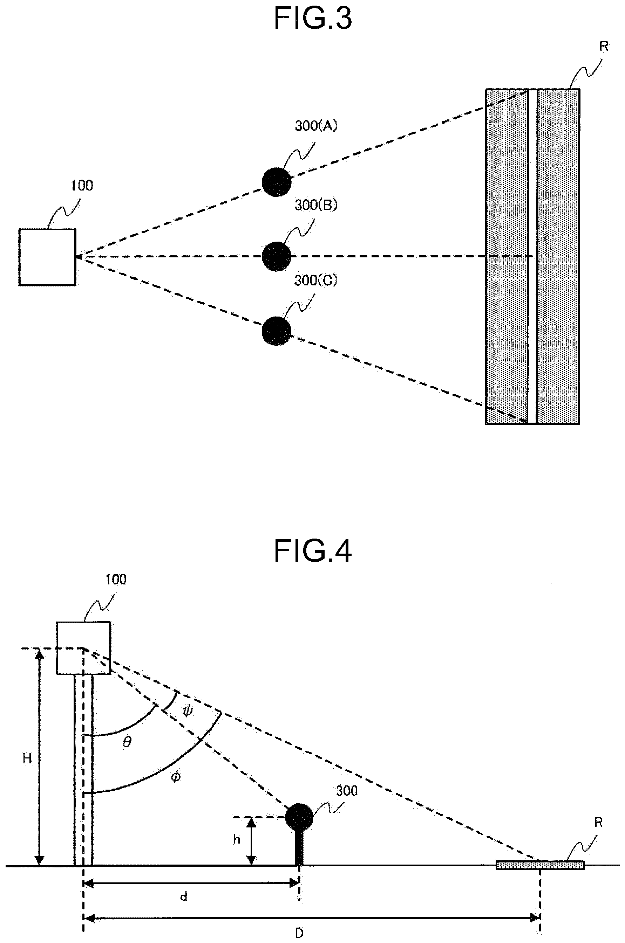

To solve the problem, in the radar system of the present embodiment, a reference reflective body 300 is installed outside the detection target area R so that the adjustment operation can be performed without entering the detection target area R (a restricted area). As a place to install the reference reflective body 300, the restricted area close to the detection target area R is assumed. Fig. 2 shows that three reference reflective bodies 300(A), 300(B), and 300(C) are installed at different positions outside the detection target area R. Fig. 3 is a plan view of the radar system of Fig. 2, and Fig. 4 is a side view of the radar system of Fig. 2.

As the reference reflective body 300, an omnidirectional reflective body (e.g., a spherical reflective body) which scatters the transmitted wave emitted from the radar device 100 in all directions is desirable. The reference reflective body 300 may be installed for exclusive use in the adjustment of the antenna angle, or may be installed in addition to an existing light pole, a guardrail or another installation.

Description will be made as to the adjustment of the antenna angle of the radar device 100 by the radar controller 200 with reference to Fig. 4. Here, for convenience of description, it is considered that the radar device 100, the reference reflective body 300 and the detection target area R are installed and set on the same plane, but in case where a gradient, difference in level or the like is present in each place, a positional relationship between the respective places may be taken into consideration.

As shown in Fig. 4, a height of the radar device 100 to a set surface of the detection target area R is denoted with H, and a height of the reference reflective body 300 to the set surface of the detection target area R is denoted with h. That is, a vertical distance between the radar device 100 and the detection target area R is denoted with H, and a vertical distance between the reference reflective body 300 and the detection target area R is denoted with h. Furthermore, a horizontal distance between the radar device 100 and a central line of the detection target area R on an extension line where the reference reflective body 300 is seen from the radar device 100 is denoted with D, and a horizontal distance between the radar device 100 and the reference reflective body 300 is denoted with d. Here, the central line of the detection target area R is a center line in an extending direction (an up-down direction of Fig. 2) of the detection target area R, and is orthogonal (or almost orthogonal) to the extension line where the reference reflective body 300 is seen from the radar device 100.

The following equation is established from a positional relationship shown in Fig. 4:

$$\theta = \arctan \left( d/(H-h) \right) \ ... \ (\text{Equation 1}),$$

in which $\theta$ is an optimum angle when the reference reflective body 300 is seen from the radar device 100.

Furthermore, the following equation is established:

$$\phi = \arctan \left( D/H \right) \ ... \ (\text{Equation 2}),$$

in which $\phi$ is an optimum angle when the detection target area R is seen from the radar device 100.

These angles $\theta$ and $\phi$ can be geometrically calculated in accordance with installation information (the positional relationship of Fig. 4) during a construction to install the radar device, from the above respective equations. However, the gradient, difference in level or the like is actually present on an installation surface. Therefore, if the angles are simply calculated only by using design values (H, h, D, d), an error may be generated. In this case, it is preferable to calculate the angles $\theta$ and $\phi$ in due consideration of the gradient, difference in level or the like.

The angles $\theta$ and $\phi$ geometrically calculated in the above operation indicate theoretical values. If the angles are actually measured, the optimum angle may vary. Furthermore, also in case where mechanical deviation or the like is generated in an antenna fixing angle due to, for example, change over time, the optimum angle may vary. Deterioration of receiving sensitivity due to the deviation in the antenna fixing angle noticeably appears in case where an antenna having a small beam width (a power half value width) is used.

Here, the following equation is established:

$$\varphi = \phi - \theta ... \ (\text{Equation 3}),$$

in which $\varphi$ is an angle difference between the optimum antenna angle $\theta$ to the reference reflective body 300 and the optimum antenna angle $\phi$ to the detection target area R.

If the calculated optimum antenna angles $\theta$ and $\phi$ to the reference reflective body 300 and the detection target area R deviate from actual optimum antenna angles $\theta'$ and $\phi'$, a deviation amount $\Delta\theta$ (= $\theta-\theta'$) of the antenna angle $\theta$ to the reference reflective body 300 almost matches a deviation amount $A\phi$ (= $\phi-\phi'$) of the antenna angle $\phi$ to the detection target area R, and hence the angle difference $\varphi$ hardly changes.

From the above, it is seen that if an actually measured value $\theta'$ of the optimum antenna angle to the reference reflective body 300 is known, an actually measured value φ' of the optimum antenna angle to the detection target area R can be obtained just by adjusting the angle difference φ.

To solve the problem, the radar controller 200 of the present embodiment controls the radar device 100, actually measures the optimum antenna angle to the reference reflective body 300, and calculates the actual optimum angle φ' = θ'+φ to the detection target area R on the basis of the actually measured value θ' of the eventually obtained optimum angle and the angle difference φ between the above calculated theoretically optimum angles θ and φ.

In the radar controller 200, upon the calculation of the actual optimum angle φ' to the detection target area R, the radar device 100 is controlled to adjust and direct the antenna at the angle φ'. Note that through actual measurement without calculating the angle φ', the antenna may be directed at the optimum angle θ' to the reference reflective body 300, and then the antenna may be rotated from the angle as much as the angle difference φ.

Regardless of the control to perform, it is necessary that the radar controller 200 can acquire at least the angle difference φ. The radar controller 200 may only hold the angle difference φ itself, or may hold the above design values (H, h, D, d) or the calculated optimum angles θ, φ, and calculate the angle difference φ in the operation.

Here, in case where the radar device 100 rotates in a horizontal direction, as shown in Fig. 2 and Fig. 3, two or more reference reflective bodies 300 which can be detected by the radar device 100 may be present. In this case, optimum antenna angles may be individually and actually measured to all the reference reflective bodies 300 by the same method as described above, and the antenna may be adjusted with the angle difference φ.

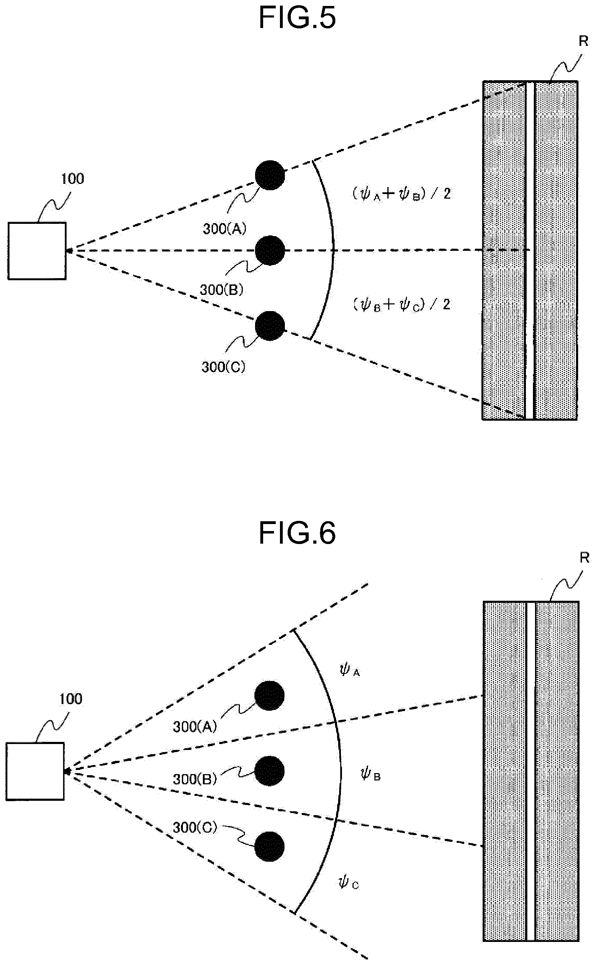

Furthermore, in case where the angle difference φ varies with each reference reflective body, as shown in Fig. 5 and Fig. 6, an angle range may be divided and the angle difference φ may be adaptively changed.

In Fig. 5, in case where angle differences φ_A, φ_B, and φ_C are obtained for the reference reflective bodies 300(A), 300(B), and 300(C), respectively, an average value of φ_A and φ_B (= (φ_A+φ_B)/2) is applied to an area between the reference reflective body 300(A) and the reference reflective body 300(B), and an average value of φ_B and φ_C (= (φ_B+φ_C)/2) is applied to an area between the reference reflective body 300(B) and the reference reflective body 300(C).

In Fig. 6, in case where the angle differences φ_A, φ_B, and φ_C are obtained for the reference reflective bodies 300(A), 300(B), and 300(C), respectively, φ_A is applied to a predetermined area centered on the reference reflective body 300(A), φ_B is applied to a predetermined area centered on the reference reflective body 300(B), and φ_C is applied to a predetermined area centered on the reference reflective body 300(C).

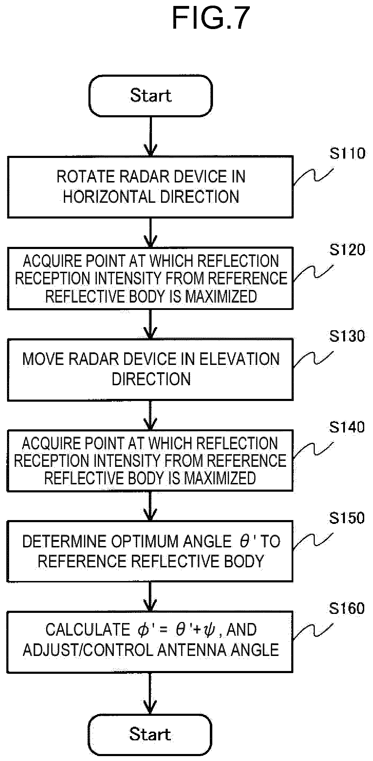

Fig. 7 illustrates an example of an adjustment flow of the antenna angle by the radar system of the present embodiment.

The radar controller 200 first rotates the radar device 100 in the horizontal direction (step S110), and specifies a point at which reflection receiving intensity from the reference reflective body 300 is maximized (step S120). The radar controller 200 rotates the radar device 100 in a vertical direction at that point (step S130), and specifies the point at which the reflection receiving intensity from the reference reflective body 300 is maximized (step S140). An angle at this time is the actually measured value θ' of the optimum antenna angle to the reference reflective body 300 (step S150). The radar controller 200 calculates the optimum antenna angle φ' = θ'+φ to the detection target area R, and controls and adjusts the radar device 100 so that the antenna angle reaches φ'.

Note that the description has been made so far on the assumption that the reference reflective body 300 is disposed between the radar device 100 and the detection target area R, but needless to say, the present invention is applicable also to a configuration where the reference reflective body 300 is disposed on a side opposite to the radar device 100 with respect to the detection target area R.

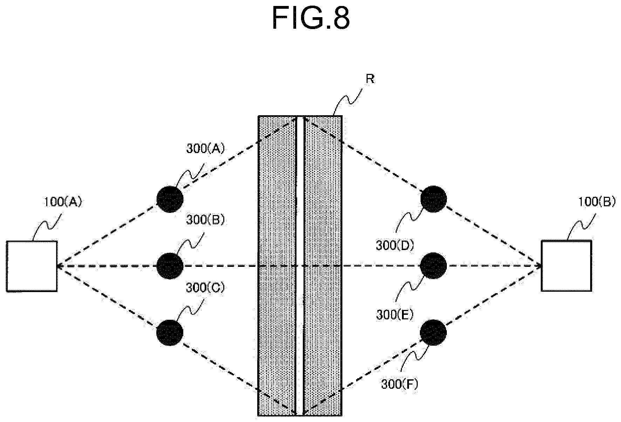

Fig. 8 shows a behavior that radar devices 100 and reference reflective bodies 300 are arranged on opposite sides of a detection target area R. A configuration where the radar devices 100 are arranged on the opposite sides of the detection target area R is effective for a case where monitoring only by one-side radar device 100 is difficult (e.g., a case where a central portion of the detection target area R is formed to be raised). In the drawing, a radar device 100(A) and reference reflective bodies 300(A) to (C) are installed on a left side of the detection target area R, and a radar device 100(B) and reference reflective bodies 300(D) to (F) are installed on a right side of the detection target area R.

In case of such an arrangement, the radar device 100 may adjust the antenna angle only by use of the reference reflective body 300 present on the same side, or may adjust the antenna angle by use of the reference reflective body 300 present on the opposite side. In particular, in case where the reference reflective body 300 is also present on an opposite side of an extension line (or a vicinity thereof) connecting the radar device 100 and the reference reflective body 300 on the same side, it is preferable to adjust the antenna angle by use of these two reference reflective bodies 300.

As an example, description will be made as to a case where the radar device 100(A) adjusts the antenna angle by use of the reference reflective body 300(B) on the same side and the reference reflective body 300(E) on the opposite side. In this case, an optimum antenna angle to the detection target area R based on the reference reflective body 300(B) on the same side and an optimum antenna angle to the detection target area R based on the reference reflective body 300(E) on the opposite side are obtained, respectively, and to an intermediate value between the angles, an antenna angle of the radar device 100(A) may be adjusted.

As described above, the radar system of the present embodiment is provided with the radar device 100 installed with the antenna directed toward the specific detection target area R, the reference reflective body 300 installed in the prescribed position, and the radar controller 200 which controls the antenna angle of the radar device 100.

Furthermore, the radar controller 200 is configured to control the antenna angle of the radar device 100 on the basis of the positional relationship among the antenna of the radar device 100, the reference reflective body 300, and the detection target area R, and on the basis of a receiving result of the reflected wave from the reference reflective body 300 obtained by the antenna.

More specifically, the radar controller 200 calculates the optimum antenna angle $\phi' = \theta' + \varphi$ to the detection target area R on the basis of the angle difference $\varphi$ between the optimum antenna angle $\theta$ to the reference reflective body 300 and the optimum antenna angle $\phi$ to the detection target area R calculated based on the above positional relationship, and on the basis of the optimum antenna angle $\theta'$ to the reference reflective body 300 based on the receiving result of the reflected wave from the reference reflective body 300, to control the angle of the antenna of the radar device 100 into the antenna angle $\phi'$.

This configuration enables the antenna angle to be optimally adjusted without an operator entering the detection target area of the radar device. Note that the reference reflective body may be installed for each adjustment of the antenna angle. However, by use of the reference reflective body fixedly installed as described above, the operator does not have to go to an installation place of the radar device. Therefore, the operator can operate the radar controller installed in the control room, the monitoring room or the like, to remotely adjust the antenna angle of the radar device. Note that if a scheduled date to adjust the antenna angle or an interval to perform the adjustment is registered in the radar controller in advance, the antenna angle can be automatically adjusted without the operator operating the radar controller, and periodic maintenance (readjustment of the antenna angle) can be easily achieved. Note that it is preferable to adjust the antenna angle in a time zone where traffic is low in the detection target area, such as at nighttime or early in morning.

Here, it has been described above that the radar controller controls the radar device to adjust the antenna angle. Alternatively, the radar device may contain a function of the radar controller and autonomously adjust the antenna angle. In this case, the radar device may hold the angle difference $\varphi$ (or a value for use in the calculation of the difference) in advance, periodically actually measure the optimum angle to the reference reflective body, and adjust the antenna angle to be optimum to the detection target area.

Furthermore, it has been described above that the reference reflective body 300 is installed in the prescribed position outside the detection target area R. Alternatively, the reference reflective body 300 may be installed in a prescribed position inside the detection target area R. Furthermore, the reference reflective body 300 may be installed for exclusive use in adjustment of the antenna angle of the radar device, and a lamp, a sign or the like may be utilized as the reference reflective body 300.

As above, the present invention has been described in detail, but the present invention is not limited to the system described herein, and needless to say, can be broadly applied also to a system other than the above system.

Additionally, the present invention can be provided, for example, as a method or system to execute processing according to the present invention, program to achieve such a method or system, a storage medium to store the program, or the like.

INDUSTRIAL APPLICABILITY

The present invention can be utilized in a radar device which detects an object present in a specific detection target area on the basis of a receiving result of a reflected wave to a transmitted wave.

REFERENCE SIGNS LIST

| | |
|---|---|
| 100 | radar device |
| 200 | radar controller |
| 210 | detection result display device |
| 300 | reference reflective body |
| R | detection target area |

**Claims**

1. A radar system which controls an angle of an antenna of a radar device detecting an object present in a specific detection target area on the basis of a receiving result of a reflected wave to a transmitted wave, comprising:

   a reference reflective body installed in a prescribed position, and
   a controller which controls the angle of the antenna on the basis of a positional relationship among the antenna, the reference reflective body, and the detection target area, and on the basis of a receiving result of the reflected wave from the reference reflective body obtained by the antenna.

2. The radar system according to claim 1, wherein the controller calculates an optimum antenna angle $\phi'$ = $\theta'+\varphi$ to the detection target area on the basis of an angle difference $\varphi$ between an optimum antenna angle $\theta$ to the reference reflective body and an optimum antenna angle $\phi$ to the detection target area calculated based on the positional relationship, and on the basis of an optimum antenna angle $\theta'$ to the reference reflective body based on the receiving result of the reflected wave from the reference reflective body, to control the angle of the antenna into the antenna angle $\phi'$.

3. The radar system according to claim 2, wherein the antenna angles $\theta$ and $\phi$ are calculated on the basis of relational equations:

$$\theta = \arctan\ (d/(H-h)),$$

and
$\phi = \arctan(D/H)$, in which H is a height of the antenna, h is a height of the reference reflective body, d is a horizontal distance between the antenna and the reference reflective body, and D is a horizontal distance between the antenna and the detection target area.

4. The radar system according to claim 1, wherein the controller controls the angle of the antenna by use of at least one of a reference reflective body installed on the same side as the radar device to the detection target area or a reference reflective body installed on a side opposite to the radar device with respect to the detection target area.

5. The radar system according to claim 1, wherein the controller controls the angle of the antenna of the radar device by use of two reference reflective bodies, in case where the two reference reflective bodies are installed to sandwich the detection target area therebetween and the radar device is installed on an extension line connecting the two reference reflective bodies.

6. The radar system according to claim 1, wherein the controller is incorporated in the radar device, or is a separate device communicatively connected to the radar device.

7. A radar device which detects an object present in a specific detection target area on the basis of a receiving result of a reflected wave to a transmitted wave obtained by an antenna, wherein, by use of a reference reflective body installed in a prescribed position, an angle of the antenna is controlled on the basis of a positional relationship among the antenna, the reference reflective body, and the detection target area, and on the basis of a receiving result of the reflected wave from the reference reflective body obtained by the antenna.

8. A method for adjusting a radar antenna to control an angle of the antenna of a radar device which detects an object present in a specific detection target area on the basis of a receiving result of a reflected wave to a transmitted wave, comprising:

specifying an optimum antenna angle $\theta'$ to a reference reflective body on the basis of the receiving result of the reflected wave from the reference reflective body installed in a prescribed position obtained by the antenna, and controlling an angle of the antenna so that the angle is $\theta'+\phi$, by use of an angle difference $\varphi$ between an optimum antenna angle $\theta$ to the reference reflective body and an optimum antenna angle $\phi$ to the detection target area calculated on the basis of a positional relationship among the antenna, the reference reflective body, and the detection target area.

# FIG.1

# FIG.2

# FIG.3

# FIG.4

# FIG.5

$(\psi_A + \psi_B) / 2$

$(\psi_B + \psi_C) / 2$

100

300(A)

300(B)

300(C)

R

# FIG.6

$\psi_A$

$\psi_B$

$\psi_C$

100

300(A)

300(B)

300(C)

R

# FIG.7

```
                    ┌─────────────┐
                    │    Start    │
                    └──────┬──────┘
                           │
                           ▼
          ┌────────────────────────────────┐   S110
          │      ROTATE RADAR DEVICE IN     │
          │       HORIZONTAL DIRECTION      │
          └────────────────┬───────────────┘
                           │
                           ▼
          ┌────────────────────────────────┐   S120
          │  ACQUIRE POINT AT WHICH REFLECTION │
          │ RECEPTION INTENSITY FROM REFERENCE │
          │     REFLECTIVE BODY IS MAXIMIZED   │
          └────────────────┬───────────────┘
                           │
                           ▼
          ┌────────────────────────────────┐   S130
          │   MOVE RADAR DEVICE IN ELEVATION │
          │            DIRECTION             │
          └────────────────┬───────────────┘
                           │
                           ▼
          ┌────────────────────────────────┐   S140
          │  ACQUIRE POINT AT WHICH REFLECTION │
          │ RECEPTION INTENSITY FROM REFERENCE │
          │     REFLECTIVE BODY IS MAXIMIZED   │
          └────────────────┬───────────────┘
                           │
                           ▼
          ┌────────────────────────────────┐   S150
          │  DETERMINE OPTIMUM ANGLE θ' TO   │
          │    REFERENCE REFLECTIVE BODY     │
          └────────────────┬───────────────┘
                           │
                           ▼
          ┌────────────────────────────────┐   S160
          │   CALCULATE φ' = θ'+ψ, AND       │
          │  ADJUST/CONTROL ANTENNA ANGLE    │
          └────────────────┬───────────────┘
                           │
                           ▼
                    ┌─────────────┐
                    │    Start    │
                    └─────────────┘
```

ROTATE RADAR DEVICE IN HORIZONTAL DIRECTION — S110

ACQUIRE POINT AT WHICH REFLECTION RECEPTION INTENSITY FROM REFERENCE REFLECTIVE BODY IS MAXIMIZED — S120

MOVE RADAR DEVICE IN ELEVATION DIRECTION — S130

ACQUIRE POINT AT WHICH REFLECTION RECEPTION INTENSITY FROM REFERENCE REFLECTIVE BODY IS MAXIMIZED — S140

DETERMINE OPTIMUM ANGLE $\theta'$ TO REFERENCE REFLECTIVE BODY — S150

CALCULATE $\phi' = \theta' + \psi$, AND ADJUST/CONTROL ANTENNA ANGLE — S160

# FIG.8

## INTERNATIONAL SEARCH REPORT

| International application No. |
| --- |
| PCT/JP2019/009703 |

| A. CLASSIFICATION OF SUBJECT MATTER |
| --- |
| Int.Cl. G01S7/40(2006.01)i, G01S13/91(2006.01)i |
| According to International Patent Classification (IPC) or to both national classification and IPC |

| B. FIELDS SEARCHED |
| --- |
| Minimum documentation searched (classification system followed by classification symbols) |
| Int.Cl. G01S7/00-17/95, G08G1/00-9/02, G01V3/12 |

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2017-154528 A (DAIDO SIGNAL CO., LTD.) 07 September 2017, paragraphs [0024]-[0058], fig. 1-9 (Family: none) | 1-8 |
| A | JP 09-178856 A (HONDA MOTOR CO., LTD.) 11 July 1997, paragraphs [0016]-[0041], fig. 1-6 & US 5731779 A, column 3, line 34 to column 6, line 62, fig. 1-6 | 1-8 |
| A | JP 2008-224225 A (MITSUBISHI ELECTRIC CORP.) 25 September 2008, paragraphs [0011]-[0012], fig. 2 (Family: none) | 1-8 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 May 2019 (27.05.2019) | 04 June 2019 (04.06.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/009703 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-232887 A (OMRON CORP.) 02 October 2008, entire text, all drawings & US 2008/0231514 A1 & EP 1972960 A1 & CN 101271156 A | 1-8 |
| A | JP 2004-523746 A (SAFEGATE INTERNATIONAL AB) 05 August 2004, entire text, all drawings & JP 2007-121307 A & US 6563432 B1 & WO 2002/056054 A2 & EP 1482326 A1 & CA 2434444 A1 & CN 1489703 A & KR 10-2003-0077001 A & CN 101196565 A & CA 2746618 A1 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017018021 A